# EUROPEAN PATENT APPLICATION

(11) **EP 3 112 596 A1**
(43) Date of publication of application: **04.01.2017**
(21) Application number: 16177559.8
(22) Date of filing: 01.07.2016
(51) Int. Cl.: F01D 5/18, F01D 9/06

(54) **GAS TURBINE ENGINE AIRFOIL WITH BI-AXIAL SKIN COOLING PASSAGE AND CORRESPONDING GAS TURBINE ENGINE**

(30) Priority: 01.07.2015 US 201514789356
(71) Applicant: United Technologies Corporation, Farmington, CT 06032 (US)
(72) Inventor: WAITE, Ryan Alan, Glastonbury, CT Connecticut 06033 (US); DEVORE, Matthew A., Rocky Hill, CT Connecticut 06067 (US); HAGAN, Benjamin F., Manchester, CT Connecticut 06040 (US)
(74) Representative: Iceton, Greg James

(57) **Abstract**

An airfoil (62) for a gas turbine engine includes a body that extends in a radial direction that provides an exterior airfoil surface. The body includes pressure and suction side walls (70, 72) that extend from a leading edge (74) to a trailing edge (76) in a chord-wise direction. A core cooling passage (78, 80) is provided between the pressure and suction side walls (70, 72) and extends in the radial direction. A skin passage (82) is arranged in one of the pressure and suction side walls (70, 72) between the core cooling passage (78, 80) and the exterior airfoil surface. The skin passage (82) includes a first passageway (88) that extends in the radial direction. The first passageway (88) turns to a second passageway (90) that extends in the chord-wise direction to terminate at an exit arranged near the trailing edge (76). A corresponding gas turbine engine is also provided.

## Description

### BACKGROUND

This disclosure relates to a gas turbine engine airfoil. More particularly, the disclosure relates to a cooling configuration using thin cooling passages.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Many blades and vanes, blade outer air seals, turbine platforms, and other components include internal core cooling passages. Sometimes additional, thin cool cooling passages formed using "skin cores" are used between the core passages and the exterior airfoil surface. Typically, these passages run in a solely radial direction. On occasion, these skin cores may be configured in a serpentine arrangement commonly used to form the core passages.

### SUMMARY

In one exemplary embodiment, an airfoil for a gas turbine engine includes a body that extends in a radial direction that provides an exterior airfoil surface. The body includes pressure and suction side walls that extend from a leading edge to a trailing edge in a chord-wise direction. A core cooling passage is provided between the pressure and suction side walls and extends in the radial direction. A skin passage is arranged in one of the pressure and suction side walls between the core cooling passage and the exterior airfoil surface. The skin passage includes a first passageway that extends in the radial direction. The first passageway turns to a second passageway that extends in the chord-wise direction to terminate at an exit arranged near the trailing edge.

In a further embodiment of any of the above, the first passageway includes an inlet to the skin passage. The inlet is configured to receive a cooling fluid.

In a further embodiment of any of the above, the exit is at the exterior airfoil surface.

In a further embodiment of any of the above, the exit is arranged at the trailing edge.

In a further embodiment of any of the above, the first and second passageways are arranged in an L-shape.

In a further embodiment of any of the above, multiple L-shaped skin passages are nested relative to one another.

In a further embodiment of any of the above, the skin passages are provided in the pressure side wall.

In a further embodiment of any of the above, the skin passages are provided in the suction side wall.

In a further embodiment of any of the above, there is an inner platform. The body extends radially from the inner platform.

In a further embodiment of any of the above, there is an outer platform. The body is radially interconnected between the inner and outer platforms.

In a further embodiment of any of the above, the first passageway includes a cross-section that has a width in the chord-wise direction and a thickness in a thickness direction that is normal to the chord-wise direction. A ratio of the width to the thickness is in a range of 2-20, and the thickness is in a range of 0.010 inch to 0.100 inch (0.25 mm to 2.54 mm).

In a further embodiment of any of the above, the first and second passageways respectively extend first and second lengths respectively in the radial and chord-wise directions. The second length is 50% +/- 20% of the first length.

In another exemplary embodiment, a gas turbine engine includes a turbine section that has a stage with circumferentially arranged airfoils. The airfoils are provided by a body that extends in a radial direction that provides an exterior airfoil surface. The body includes pressure and suction side walls extending from a leading edge to a trailing edge in a chord-wise direction, a core cooling passage is provided between the pressure and suction side walls and extends in the radial direction, and a skin passage is arranged in one of the pressure and suction side walls between the core cooling passage and the exterior airfoil surface, the skin passage includes a first passageway that extends in the radial direction, the first passageway turns to a second passageway that extends in the chord-wise direction to terminate at an exit arranged near the trailing edge.

In a further embodiment of any of the above, the stage is a fixed stage with vanes that provide the airfoils.

In a further embodiment of any of the above, the vanes each include an outer platform to which the airfoil is interconnected, and the first passageway has an inlet provided at the outer platform.

In a further embodiment of any of the above, the exit is at the exterior airfoil surface.

In a further embodiment of any of the above, the first and second passageways are arranged in an L-shape.

In a further embodiment of any of the above, multiple L-shaped skin passages are nested relative to one another.

In a further embodiment of any of the above, the first passageway includes a cross-section that has a width in the chord-wise direction and a thickness in a thickness direction that is normal to the chord-wise direction. A ratio of the width to the thickness is in a range of 2-20 and the thickness is in a range of 0.010 inch to 0.100 inch (0.25 mm to 2.54 mm).

In a further embodiment of any of the above, the first and second passageways respectively extend first and second lengths respectively in the radial and chord-wise directions. The second length is 50% +/- 20% of the first length.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view of one example airfoil.
Figure 3 is a cross-sectional view of the airfoil shown in Figure 2 taken along line 3-3.
Figure 4 is a cross-sectional view of the airfoil shown in Figure 3 taken along line 4-4.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

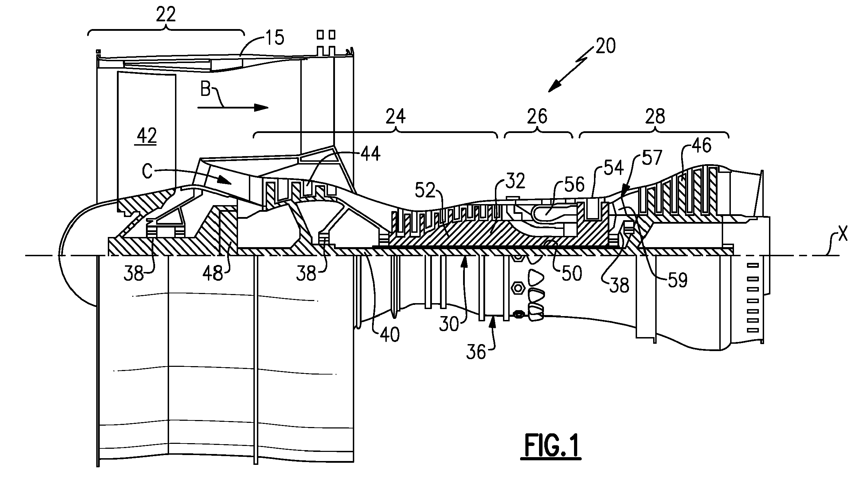

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

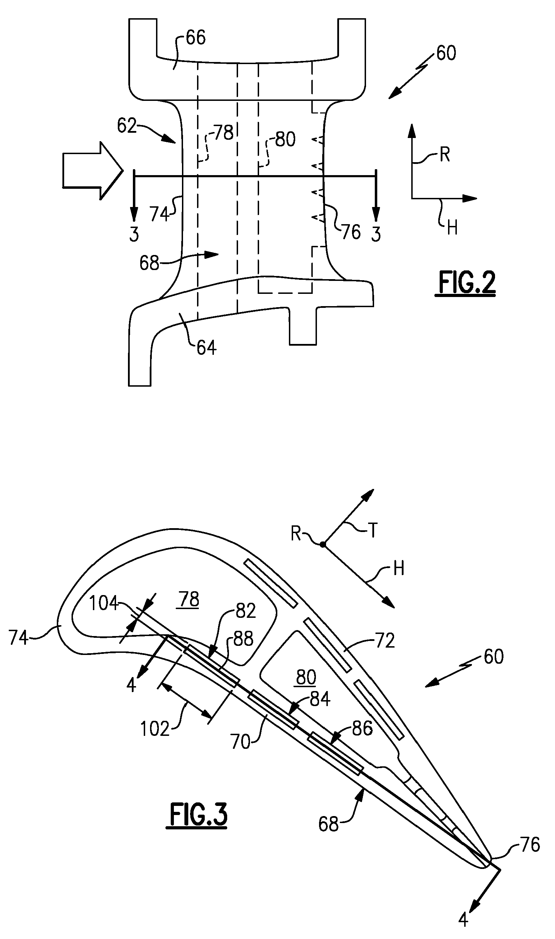

Referring to Figure 2, a vane 60 is shown that may be used in a fixed stage of the turbine section 28. It should be understood, however, that the disclosed airfoil cooling passage can also be used in the compressor section and may also be provided in a blade of a rotating stage. The vane 60 includes a body providing an airfoil 62 that is interconnected to inner and outer platforms 64, 66.

The airfoil 62 extends in a radial direction R that provides an exterior airfoil surface 68. The body of the airfoil 62 includes pressure and suction side walls 70, 72 extending from a leading edge 74 to a trailing edge 76 in a chord-wise direction H. Core cooling passages 78, 80 are provided between the pressure and suction side walls 70, 72 and extend in the radial direction R. Generally, the core cooling passages are relatively large and centrally located within the airfoil 62 in a thickness direction T. More or fewer core cooling passages may be provided, and the core cooling passages may be configured in a different manner than illustrated. The core cooling passages may be provided by ceramic cores in one example casting manufacturing method.

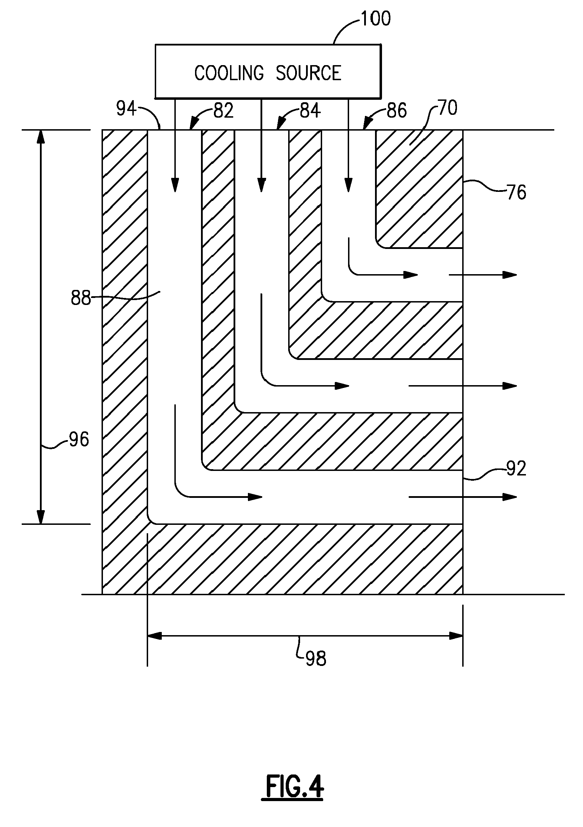

Referring to Figure 3, at least one skin passage 82 is arranged in at least one of the pressure and suction side walls 70, 72 between the core cooling passages 78, 80 and the exterior airfoil surface 68. In the example, multiple L-shaped skin passages 82, 84, 86 are nested relative to one another, as shown in Figure 4. Each skin passage includes a first passageway 88 that extends in the radial direction R. The first passageway 88 turns to a second passageway 90 that extends in the chord-wise direction H to terminate at an exit 92 near the trailing edge 76, and in one example, at the trailing edge 76. "Near" the trailing edge means within 20% of the trailing edge 92 in the chord-wise direction H. The exits 92 may be provided through the exterior airfoil surface 68 and/or within the trailing edge slot of the core cooling passage 80.

The first and second passageways 88, 90 respectively extend first and second lengths 96, 98 respectively in the radial R and chord-wise H directions. In the example, the second length 98 is 50% +/- 20% of the first length 96.

The first passageway 82 has an inlet 94 configured to receive cooling fluid from a cooling source 100. In the example, the inlet 94 is arranged in the outer platform 66. The skin passages may be provided by a refractory metal material, such as molybdenum in one example casting manufacturing method. Additive or other manufacturing techniques may also be used.

Returning to Figure 3, the first passageway 88 includes a cross-section that has a width 102 in the chord-wise direction H and a thickness 104 in the thickness direction T that is normal to the chord-wise direction H. A ratio of the width 102 to the thickness 104 is in a range of 2-20, and the thickness is in a range of 0.010 inch to 0.100 inch (0.25 mm to 2.54 mm), which is significantly small that typical core cooling passages. For the second passageway 90, the width is provided in the radial direction R, and the thickness is provided in the thickness direction T. The ratio of width to thickness in the second passageway is in a range that is similar to the range in the first passageway.

The disclosed passageways purge the cooling fluid at or near the trailing edge, and provide discrete passages with discrete exits. This enables each passageway to be controlled individually to achieve desired heat transfer and pressure drop. Each passageway may be controlled by, for example, the use of fins, pedestals, trip strips and/or other features. It may be desirable to fluidly connect passageways using holes sized and located to balance pressure across the passageways.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. An airfoil (62) for a gas turbine engine comprising:
a body extending in a radial direction that provides an exterior airfoil surface, the body includes pressure and suction side walls (70, 72) extending from a leading edge (74) to a trailing edge (76) in a chord-wise direction, a core cooling passage (78, 80) is provided between the pressure and suction side walls (70, 72) and extends in the radial direction, and a skin passage (82) is arranged in one of the pressure and suction side walls (70, 72) between the core cooling passage (78, 80) and the exterior airfoil surface, the skin passage (82) includes a first passageway (88) that extends in the radial direction, the first passageway (88) turns to a second passageway (90) that extends in the chord-wise direction to terminate at an exit arranged near the trailing edge (76).

2. The airfoil according to claim 1, wherein the first passageway includes an inlet to the skin passage, the inlet configured to receive a cooling fluid.

3. The airfoil according to claims 1 or 2, wherein the exit is at the exterior airfoil surface, and preferably wherein the exit is arranged at the trailing edge.

4. The airfoil according to any preceding claim, wherein the first and second passageways are arranged in an L-shape, and preferably comprising multiple L-shaped skin passages nested relative to one another.

5. The airfoil according to claim 4, wherein the skin passages are provided in the pressure side wall, or wherein the skin passages are provided in the suction side wall.

6. The airfoil according to any preceding claim, comprising an inner platform, the body extending radially from the inner platform, and preferably comprising an outer platform, the body radially interconnected between the inner and outer platforms.

7. The airfoil according to any preceding claim, wherein the first passageway includes a cross-section that has a width in the chord-wise direction and a thickness in a thickness direction that is normal to the chord-wise direction, a ratio of the width to the thickness is in a range of 2-20, and the thickness is in a range of 0.010 inch to 0.100 inch (0.25 mm to 2.54 mm).

8. The airfoil according to any preceding claim, wherein the first and second passageways respectively extend first and second lengths respectively in the radial and chord-wise directions, wherein the second length is 50% +/- 20% of the first length.

9. A gas turbine engine comprising:
a turbine section having a stage with circumferentially arranged airfoils, the airfoils are provided by a body that extends in a radial direction that provides an exterior airfoil surface, the body includes pressure and suction side walls extending from a leading edge to a trailing edge in a chord-wise direction, a core cooling passage is provided between the pressure and suction side walls and extends in the radial direction, and a skin passage is arranged in one of the pressure and suction side walls between the core cooling passage and the exterior airfoil surface, the skin passage includes a first passageway that extends in the radial direction, the first passageway turns to a second passageway that extends in the chord-wise direction to terminate at an exit arranged near the trailing edge.

10. The engine according to claim 9, wherein the stage is a fixed stage with vanes that provide the airfoils.

11. The engine according to claim 10, wherein the vanes each include an outer platform to which the airfoil is interconnected, and the first passageway has an inlet provided at the outer platform.

12. The engine according to any of claims 9-13, wherein the exit is at the exterior airfoil surface.

13. The engine according to claim 13, wherein the first and second passageways are arranged in an L-shape, and preferably comprising multiple L-shaped skin passages nested relative to one another.

14. The engine according to any of claims 9-13, wherein the first passageway includes a cross-section that has a width in the chord-wise direction and a thickness in a thickness direction that is normal to the chord-wise direction, a ratio of the width to the thickness is in a range of 2-20, and the thickness is in a range of 0.010 inch to 0.100 inch (0.25 mm to 2.54 mm).

15. The engine according to any of claims 9-14, wherein the first and second passageways respectively extend first and second lengths respectively in the radial and chord-wise directions, wherein the second length is 50% +/- 20% of the first length.
